# EUROPEAN PATENT SPECIFICATION

(11) **EP 4 257 388 B1**
(45) Date of publication and mention of the grant of the patent: **02.09.2026**
(21) Application number: 23166934.2
(22) Date of filing: 06.04.2023
(51) Int. Cl.: B60K 1/00, B60K 17/346, B60K 17/348, B60K 17/36

(54) **IMPROVED TORQUE DISTRIBUTOR SYSTEM AMONG AXLES OF A HEAVY VEHICLE**
VERBESSERTES DREHMOMENTVERTEILUNGSSYSTEM ZWISCHEN ACHSEN EINES SCHWERLASTFAHRZEUGS
SYSTÈME DE DISTRIBUTION DE COUPLE AMÉLIORÉ ENTRE ESSIEUX DE VÉHICULE LOURD

(30) Priority: 07.04.2022 IT 202200006977
(43) Date of publication of application: 11.10.2023
(73) Proprietor: IVECO S.P.A., 10156 Torino (IT); On-Highway Brasil Ltda., 35.703-138 Sete Lagoas, Minas Gerais (BR)
(72) Inventor: PEREIRA DE LEMOS, Josè Francivaldo, 10156 Torino (IT); LOO, Wing, 35.703-138 SETE LAGOAS, MINAS GERAIS (BR)
(74) Representative: Studio Torta S.p.A.

(56) References cited:
- EP-A2- 0 179 991
- EP-A2- 2 574 490
- US-A- 2 395 108
- US-A1- 2004 118 242

## Description

### TECHNICAL FIELD

The present invention relates to a torque distributor system for a heavy vehicle.

The present invention is preferably, although not exclusively, applied to the distribution of torque between axles of a heavy vehicle, such as a truck. In the following, reference will be made to such application by way of example.

### STATE OF THE PRIOR ART

As is known, heavy vehicles comprise a power assembly configured to provide torque to one or more axles of the vehicle. An example of such power assembly can be an internal combustion engine, a fuel cell engine or an electric or hybrid motor assembly.

In particular, the torque is distributed by means of a transmission to the one or more axles of the vehicle, as is known. However, such transmission is specifically designed for a single drive configuration.

Therefore, if wanting to change the drive mode from single axle or multiple axles, it is necessary to redesign the transmission.

Furthermore, the current transmissions are particularly bulky and heavy if they require having to divide the torque to a plurality of axles.

Examples of known systems in the art are disclosed by publications US2395108 A, US2004/118242 A1, EP0179991 A2 or EP2574490 A2.

Therefore, there is a felt need to provide a system for distributing the torque from a power source of a vehicle to one or more axles which is versatile, compact and cost-effective.

The object of the present invention is to satisfy the above-described needs in an optimized and cost-effective manner.

### SUMMARY OF THE INVENTION

The aforementioned object is achieved by a torque distributor system as claimed in the appended claims.

### BRIEF DESCRIPTION OF THE DRAWINGS

In order to better understand the present invention, a preferred embodiment is described in the following, by way of nonlimiting example and with reference to the accompanying drawings wherein:
- Figure 1 is a schematic view of a power source system for a heavy vehicle utilized in a configuration having two drive axles;
   - Figure 2 is a section view of a distributor system according to a first embodiment of the invention in the configuration of Figure 1;
- Figure 3 is a section view of a distributor system according to a second embodiment of the invention in the configuration of Figure 1;
- Figure 4 is a schematic view of a power source system for a heavy vehicle utilized in a configuration having three drive axles;
- Figure 5 is a section view of a distributor system according to a first embodiment of the invention in the configuration of Figure 4;
- Figure 6 is a section view of a distributor system according to a second embodiment of the invention in the configuration of Figure 4;
- Figure 7 is a schematic view of a power source system for a heavy vehicle utilized in a configuration having three drive axles;
- Figure 8 is a section view of a distributor system according to a first embodiment of the invention in the configuration of Figure 7; and
- Figure 9 is a section view of a distributor system according to a second embodiment of the invention in the configuration of Figure 7.

### DETAILED DESCRIPTION OF THE INVENTION

The accompanying figures schematically illustrate a power assembly 1 configured to transmit torque through a mechanical chain to a plurality of axles 2a, 2b, 2c and 2d of a heavy vehicle (not illustrated), such as a tractor or a truck.

The power assembly 1 can be an internal combustion engine, a fuel cell system or a hybrid drive system, as known in the art.

The power assembly 1 is connected to at least one axle by means of a transmission 3, adapted to select a specific speed change, a plurality of rotating shafts 4a, 4b, 4c, 4d and a torque distributor system 5 according to the invention.

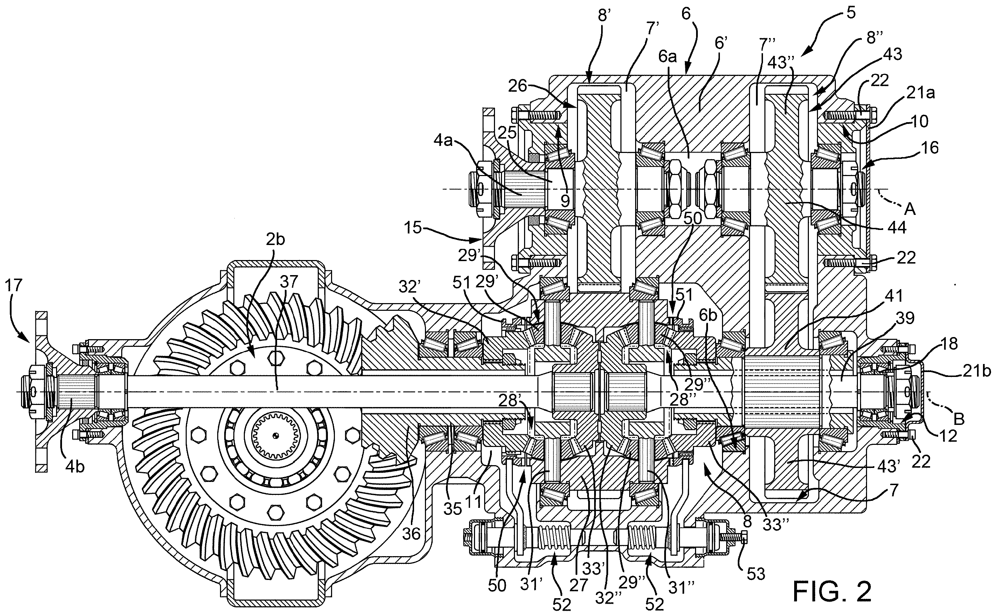

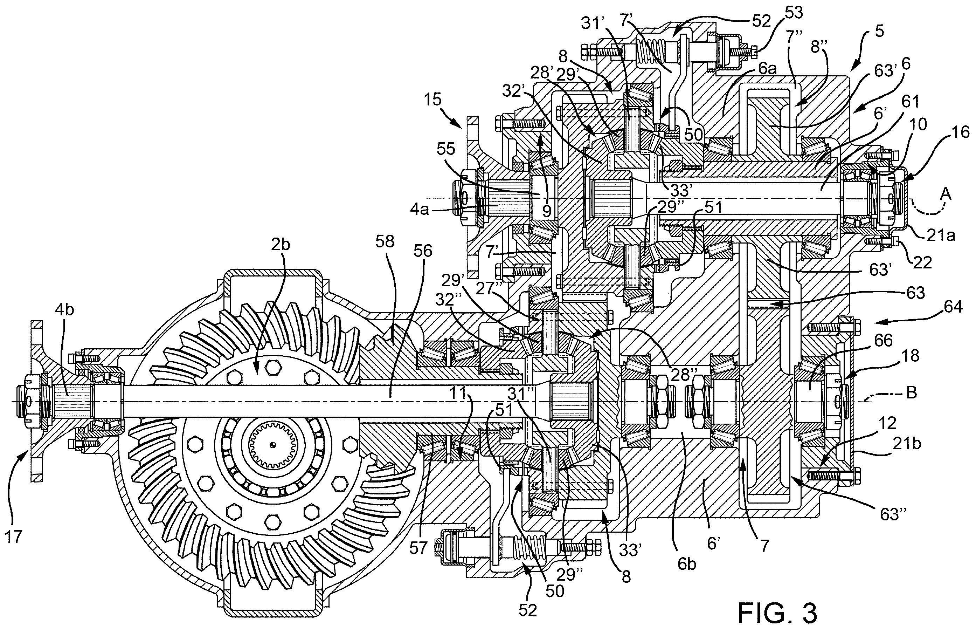

Figures 2 and 3 illustrate a configuration having two drive axles 4a, 4b where the torque distributor 5 is connected by a first rotating shaft 4a to the power assembly 1, in the described case by means of the transmission 3, and where a first axle 2a is connected by a second rotating shaft 4b.

In both embodiments, the torque distributor 5 comprises a casing 6 adapted to be supported by a fixed portion to the vehicle frame (not illustrated) defining a space 7 and a transmission assembly 8 housed inside the space 7.

Clearly, the casing 6 is advantageously built by several parts rigidly connected to each other in order to enable assembling the transmission assembly 8 in the space 7.

The casing 6 defines a plurality of openings 9, 10, 11, 12 configured to allow the passage of respective power take-offs 15, 16, 17, 18, as is better described in the following, connected to each other by the transmission 8.

More specifically, the distributor system 5 defines four openings and respective power take-offs, preferably coaxial to each other in pairs. In particular, the first and the second opening 9, 10 and the first and second power take-offs 15, 16 are coaxial to an axis A, whereas the third and the fourth opening 11, 12 and the third and fourth power take-offs 17, 18 are coaxial to an axis B.

Advantageously, the axes A and B are parallel to each other and even more preferably are parallel to a longitudinal axis of the vehicle.

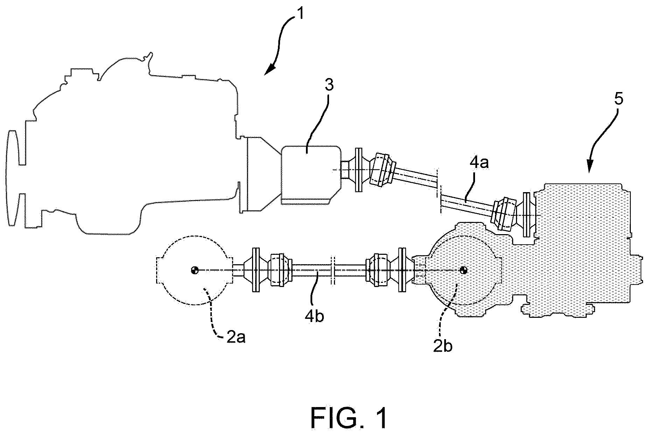

In the embodiment of Figures 2 and 3, corresponding to the use of Figure 1, where there are two drive axles, two power take-offs 15, 17 communicate with the external environment, whereas two power take-offs 16, 18 are separated from the external environment by means of covers 21a, 21b fixed to the casing 6 by means of connecting means 22, such as threaded elements.

In particular, in the described embodiment, the rotating shaft 4a is connected to the power take-off 15 and the power take-off 17 is connected to the axle 2a and to the axle 2b, as described in the following, by means of the transmission 8.

The transmission 8 essentially comprises two portions 8', 8" operatively selectively connected to each other and housed in two portions 7', 7'' of the space 7 defined by the casing 6. In particular, such portions are separated from each other by a septum portion 6' separating the portions 7', 7'' which communicate by means of respective openings 6a, 6b.

In particular, the first portion 8' operatively connects to each other the first power take-off 15 and the third power take-off 17, whereas the second portion 8" operatively connects to each other the second and the fourth power take-offs 16, 18.

In the embodiment of Figure 2, the first portion 8' comprises a support shaft 25, rigidly connected to the first power take-off 15 and advantageously coaxial to the axis A and a gear wheel 26 carried integral with the rotation by the support shaft 25.

The first portion 8' further comprises a carrier 27 defining a toothing adapted to mesh with the gear wheel 26 and adapted to house a pair of differential mechanisms 28', 28" inside. The first differential mechanism 28' is operatively connected to the third power take-off 17, whereas the second differential mechanism 28" is connected to the second transmission portion 8".

Specifically, each differential mechanism 28', 28" comprises a plurality of satellites 29', 29'' carried in a rotationally free manner by respective pins 31', 31'' integral with the carrier 27. In particular, the satellites 29', 29'' mesh with respective gear wheels 32', 33', 32", 33'' advantageously made as conical gear wheels.

In particular, a first gear wheel 32' of the first differential mechanism 28' is carried integrally by a support shaft 35 comprising a gear wheel 36, integral with it, and configured to transmit the motion to the second axle 2b of the vehicle.

A second gear wheel 33' of the first differential mechanism 28' is carried integrally by a support shaft 37 configured to be rigidly connected to the third power take-off 17. In particular, the support shaft 37 is coaxial to the support shaft 35 and housed inside the latter which is hollow for allowing the passage thereof.

On the other hand, a first gear wheel 32'' of the second differential mechanism 28" is carried integrally by a support shaft 39 rigidly connected to the fourth power take-off 18. Advantageously, the support shaft 39 is coaxial to the support shaft 37 and the first gear wheel 32" of the second differential mechanism 28" is adapted to slide in axial contact with respect to the second gear wheel 33' of the first differential mechanism 28'.

A second gear wheel 33'' of the second differential mechanism 28" is carried integrally by a support shaft 41 configured to be operatively connected to the second power take-off 16. In particular, the support shaft 41 is coaxial to the support shaft 39 and housed on the outside of the latter, being hollow.

In particular, the support shaft 41 is connected to the second power take-off 16 by means of a gear 43, comprising a first gear wheel 43' carried by the support shaft 41 and a second gear wheel 43'' carried by a further shaft 44 carried in a rotatable manner by the casing 6.

Preferably, the shaft 44 is coaxial to the shaft 25 and carried separately from it by the casing 6.

The first transmission portion 8' also comprises locking means 50 configured to lock the first and/or second differential mechanism 28', 28''. In particular, the locking means 50 are housed in the space 7, in particular in the first portion 7' of the latter.

Very briefly, the locking means 50 comprise a sleeve 51 actuated by actuator means 52 and configured to cooperate in contact with an element of the differential mechanism 28', 28" for locking the function thereof, i.e. for making each element thereof rotate at the same speed.

In the illustrated exemplifying embodiment, the locking means 50 for the first differential mechanism 28' comprise a movable sleeve 51 so as to assume a first condition in which it does not cooperate with the carrier 27 and a second condition in which it cooperates with the carrier 27 for making it selectively integral with the first gear wheel 32' of the first differential mechanism 28'.

Whereas, the locking means 50 for the second differential mechanism 28'' comprise a movable sleeve 51 so as to assume a first condition in which it does not cooperate with the carrier 27 and a second condition in which it cooperates with the carrier 27 for making it selectively integral with the second gear wheel 33'' of the second differential mechanism 28".

The actuator means 52 illustrated herein are advantageously pneumatic, i.e. comprise a compressed air actuatable piston maintained in the unlocking position of the differential by means of elastic means, as is illustrated and not further described for the sake of brevity.

In particular, in such configuration, the first differential 28' is maintained in a locked configuration by means of a locking screw 53.

In the embodiment of Figure 3, the first transmission portion 8' comprises a pair of carriers 27', 27" carried in a rotationally free manner by the casing 6 and each defining a space adapted to house respective differential mechanisms 28', 28".

The first differential mechanism 28' is operatively connected to the third power take-off 17, whereas the second differential mechanism 28" is connected to the second transmission portion 8".

Specifically, each differential mechanism 28', 28" comprises a plurality of satellites 29', 29'' carried in a rotationally free manner by respective pins 31', 31'' integral with the respective carrier 27', 27''. In particular, the satellites 29', 29" mesh with respective gear wheels 32', 33', 32", 33'' advantageously made as conical gear wheels.

In particular, the first carrier 27' is advantageously rigidly connected by means of a shaft 55 to the first power take-off 15 and a second gear wheel 33'' of the second differential mechanism 28" is connected to a support shaft 56 rigidly connected to the third power take-off 17. Furthermore, the second gear wheel 33'' is adapted to slide in axial contact with respect to a portion of the carrier 27".

A second gear wheel 32" of the second differential mechanism 28" is carried integrally by a support shaft 57 provided with a gear wheel 58, integral with it, and configured to transmit the motion to the second axle 2b of the vehicle. In particular, the first support shaft 56 is housed inside the support shaft 57, being hollow, and coaxial to it.

On the other hand, a first gear wheel 32' of the first differential mechanism 28' is carried integrally by a support shaft 59 rigidly connected to the second power take-off 16. Advantageously, the support shaft 59 is coaxial to the support shaft 55 and the first gear wheel 32'' of the first differential mechanism 28' is adapted to slide in axial contact with respect to a portion of the carrier 27'.

The second gear wheel 33' is carried integrally with the rotation by a support shaft 61 configured to be operatively connected to the fourth power take-off 18. In particular, the support shaft 61 is coaxial to the support shaft 59 and housed on the outside of the latter, being hollow and carried in a rotationally free manner by the casing 6.

In particular, the support shaft 61 is connected to the fourth power take-off 18 by means of a gear 63, comprising a first gear wheel 63' carried by the support shaft 61 and a second gear wheel 63'' carried by a further shaft 64 carried in a rotatable manner by the casing 6.

Preferably, the shaft 64 is coaxial to the shaft 56 and carried separately from it by the casing 6.

The first transmission portion 8' also comprises locking means 50 configured to lock the first and/or second differential mechanism 28', 28''. In particular, the locking means 50 are housed in the space 7, in particular in the first portion 7' of the latter.

Very briefly, the locking means 50 comprise a sleeve 51 actuated by actuator means 52 and configured to cooperate in contact with an element of the differential mechanism 28', 28" for locking the function thereof, i.e. for making each element thereof rotate at the same speed.

In the illustrated exemplifying embodiment, the locking means 50 for the first differential mechanism 28' comprise a movable sleeve 51 so as to assume a first condition in which it does not cooperate with the first carrier 27' and a second condition in which it cooperates with the first carrier 27' for making it selectively integral with the second gear wheel 33' of the first differential mechanism 28' .

Whereas, the locking means 50 for the second differential mechanism 28'' comprise a movable sleeve 51 so as to assume a first condition in which it does not cooperate with the second carrier 27'' and a second condition in which it cooperates with the second carrier 27'' for making it selectively integral with the first gear wheel 32'' of the second differential mechanism 28".

The actuator means 52 illustrated herein are advantageously pneumatic, i.e. comprise a compressed air actuatable piston maintained in the unlocking position of the differential by means of elastic means, as is illustrated and not further described for the sake of brevity.

In particular, in such configuration, the first differential 28' is maintained in a locked configuration by means of a locking screw 53.

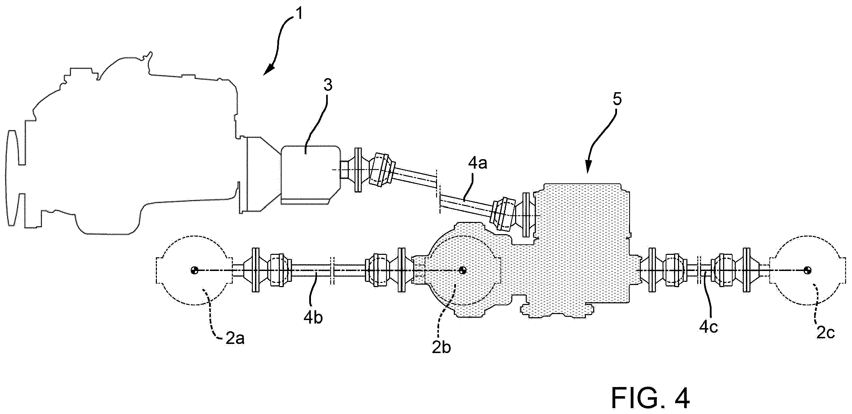

In the embodiment of Figures 4, 5 and 6, the vehicle comprises three drive axles 2a, 2b and 2c. Consequently, with respect to the embodiment of Figures 1, 2 and 3, the fourth power take-off 18 is connected to a third rotating shaft 4c which connects the transmission 8 to the third axle 2c. The connection of the third rotating shaft 4c with the axle shafts of the third axle 2c can be made as described above for the second axle 2b.

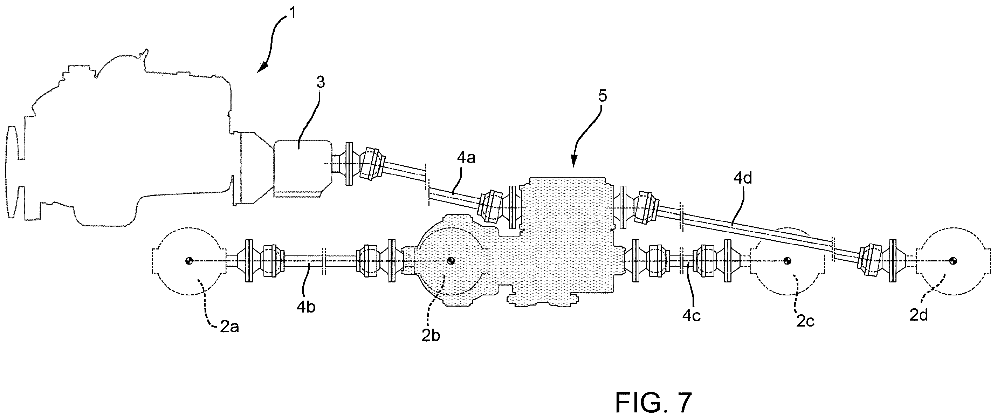

In the embodiment of Figures 7, 8 and 9, the vehicle comprises four drive axles 2a, 2b, 2c and 2d. Consequently, with respect to the embodiment of Figures 1, 2 and 3, the fourth power take-off 18 is connected to a third rotating shaft 4c which connects the transmission 8 to the third axle 2c and the second power take-off 16 is connected to a fourth rotating shaft 4d which connects the transmission 8 to the fourth axle 2d. The connection of the third and fourth rotating shafts 4c, 4d with the axle shafts of the third and fourth axles 2c, 2d can be made as described above for the second axle 2b. In such configuration, the first differentials 28' are free to be locked, i.e. are not locked by the screw 53 as in the preceding embodiments.

The wheels described in the preceding description have straight teeth and are carried by the respective shafts, as described, in a known manner for example by means of driving, bushes or other forms of connection integral with or free with respect to the rotation. Clearly, even if not expressly described, all the shafts are carried in a rotatable manner by the casing by means of rolling elements such as bearings in different mounting configurations.

The operation of the above-described embodiments is as follows.

In the embodiment of Figure 2, the torque generated by the power source 1 is transmitted through the rotating shaft 4a at the first power take-off 15 to the first support shaft 25. Here the torque passes to the first transmission branch 8' being transferred to the carrier 27. Here, the torque is subdivided by means of the pins 31', 31'' for the satellites 32', 32" which mesh with the respective gear wheels 32', 32", 33', 33". The latter drive the support shafts 37, 39 respectively and thus the third and fourth power take-offs 17, 18 and the shaft 35 which drives the axle 2b by means of the gear between gear wheel 36 and gear 37. The second gear wheel 33'' of the second differential mechanism 28" is transmitted to the shaft 41 and through the gear 43 to the shaft 44 and thus to the second power take-off 16. It should be noted that, in the present case, the second and fourth power take-offs 16, 18 rotate idle and protected by the respective covers 21a, 21b, whereas the third power take-off is connected by means of the second rotating shaft 4b to the first axle 2a which results driving.

If necessary, the locking means 50 can be activated for the second differential mechanism 28'' so as to make the shafts 39 and 41 rotate at the same speed, whereas the first mechanism 28' is maintained locked by the screw 53.

In the embodiment of Figure 3, the torque generated by the power source 1 is transmitted through the rotating shaft 4a at the first power take-off 15 to the first support shaft 55. Here the torque passes to the first transmission branch 8' being transferred to the first carrier 27'. The torque is thus subdivided between the gear wheels 32', 33' and thus to the support shaft 59 which is connected to the second power take-off 16 and to the shaft 66 by means of the gear 63 and thus to the fourth power take-off 18. Parallelly, the first carrier 27' drives the second carrier 27'' which divides the torque to the gear wheels 32", 33'' which respectively drive the shaft 57 which carries the gear wheel 58 which drives the axle 2b and the shaft 56 which is rigidly connected to the third power take-off 17. It should be noted that, in the present case, the second and the fourth power take-off 16, 18 rotate idle and protected by the respective covers 21a, 21b, whereas the third power take-off is connected by means of the second rotating shaft 4b to the first axle 2a which results driving.

If necessary, the locking means 50 can be activated for the second differential mechanism 28'' so as to make the shafts and/or 56 and 57 rotate at the same speed, whereas the first mechanism 28' is maintained locked by the screw 53.

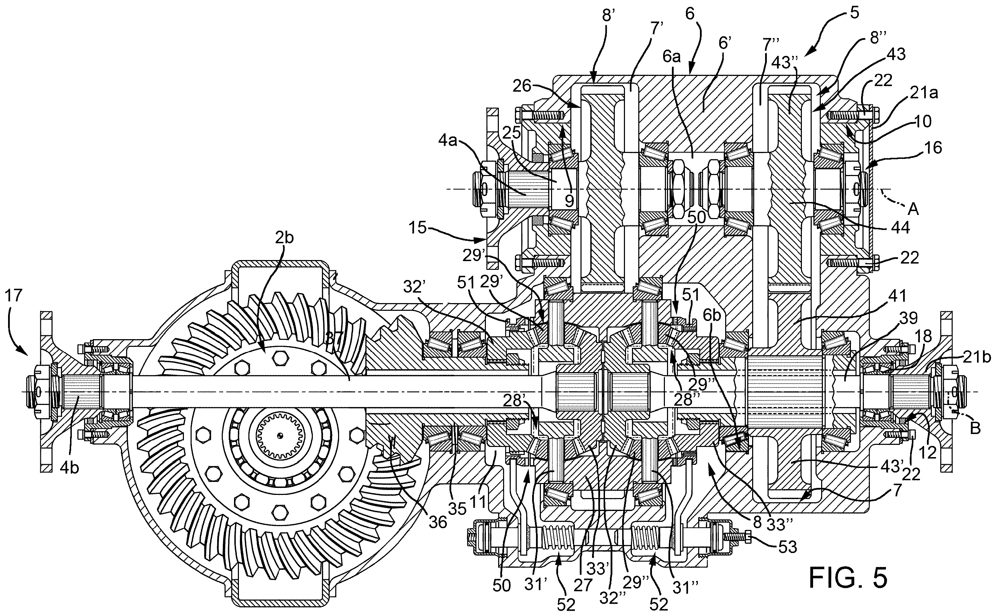

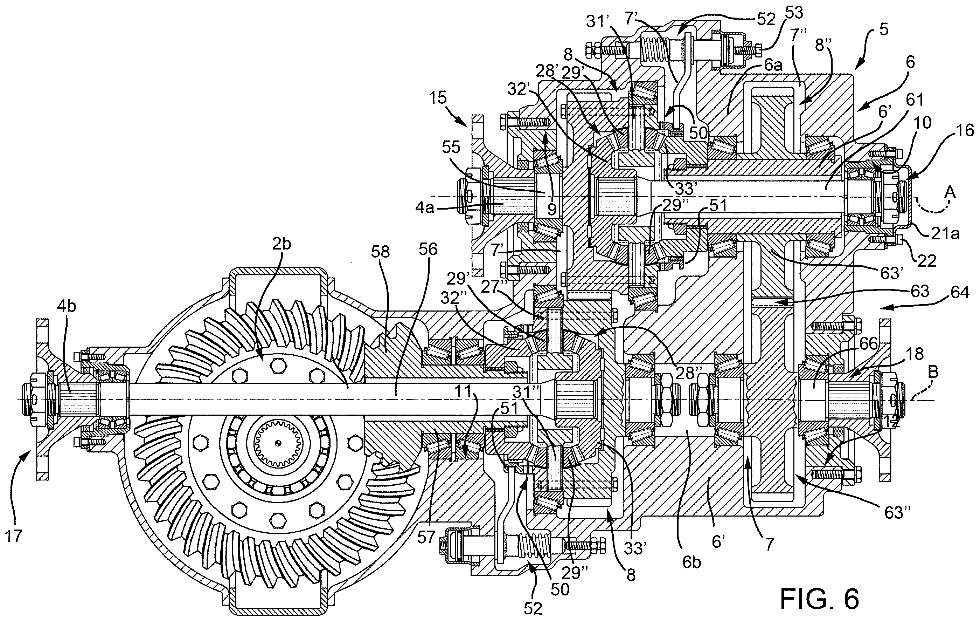

In the embodiment of Figures 5 and 6, the fourth power take-off 18 is connected by means of the third rotating shaft 4c to a third drive axle 2c and the torque is provided according to what described in the foregoing. The operation is otherwise similar to what described relative to Figures 2 and 3.

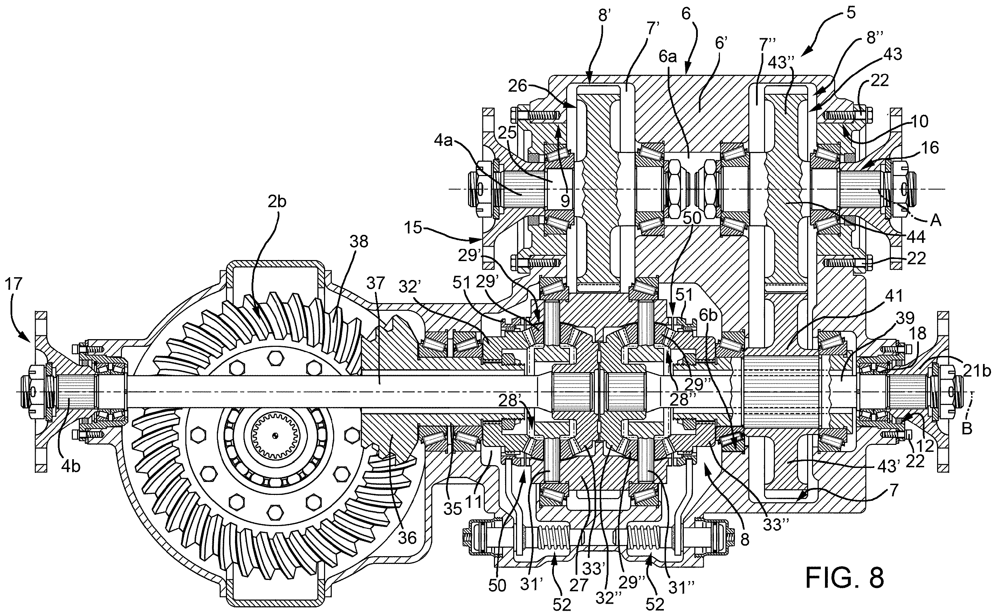

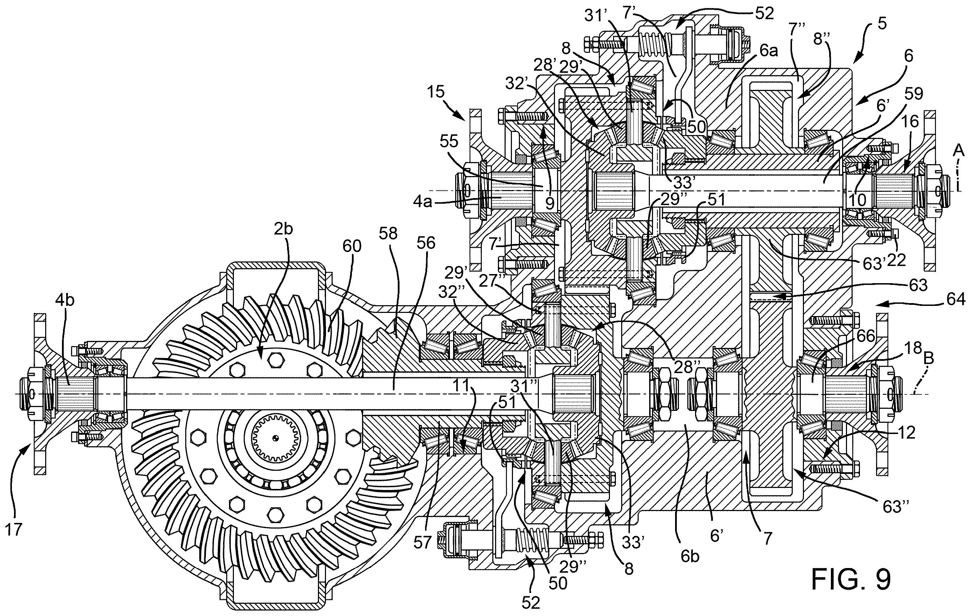

In the embodiment of Figures 8 and 9, in addition to the configuration of Figures 5 and 6, the second power take-off 16 is connected by means of the fourth rotating shaft 4d to a fourth drive axle 2d and the torque is provided according to what described in the foregoing. The operation is otherwise similar to what described relative to Figures 2 and 3.

Based on the foregoing, the advantages of a torque distributor system according to the invention are evident.

The proposed distributor system allows the distribution in a versatile manner to different axles of a vehicle enabling obtaining, with the same system, different vehicle configurations of drive axles.

Therefore, the distributor system according to the invention is particularly versatile, i.e. is suitable for a large variety of purposes reducing the manufacturing costs and allowing a high customization of the vehicle.

Furthermore, the fact that the transmission is housed inside a single space and the fact that the power take-offs can be isolated when they are not used, increases the useful life of the transmission.

The use of one or more differentials further allows having axles with equal traction utilizable in the conditions required by specific loading and/or ground situations.

The particular arrangement of the reducer assembly and of the differentials allows obtaining a high transmission jump in a compact space.

Finally, it is clear that modifications and variations can be made to the torque distributor system according to the present invention which however do not depart from the scope of protection defined by the claims.

Clearly, further mechanical elements not described for the sake of brevity can be provided.

The reduction module and the differential mechanisms or the locking means could comprise elements of different shape.

Similarly, the arrangement of the power take-offs could vary and further reduction stages between each other could be provided.

Clearly, although gear wheels having straight teeth have been described, different types of gear wheels and of teeth could be present. Still, further constructive elements omitted from the description and schematized in the drawings for the sake of brevity, could be present so as to enable the correct mounting of shafts and gear wheels.

## Claims

1. Torque distributor system (5) for distributing the torque coming from a power source (1) of a vehicle to a plurality of axles (2a, 2b, 2c, 2d) of said vehicle,
said distributor system (5) comprising a casing (6) adapted to define a space (7) configured to house a transmission (8), said casing (6) defining a plurality of openings (9, 10, 11, 12) configured to house respective power take-offs (15, 16, 17, 18) connected to each other by said transmission (8), a first power take-off (15) of said power take-offs (15, 16, 17, 18) being connectable to said power source (1) and at least a second (19) of said power take-offs (15, 16, 17, 18) being connectable to one or more of said axles (2a, 2b, 2c, 2d), said transmission (8) comprising a first portion (8') and a second portion (8") operatively connected to each other and housed in respective portions (7', 7") of said space, the first portion (8') comprising a pair of differential mechanisms (28', 28") and said second portion (8") comprising a gear (41), said pair of differential mechanisms (28', 28") and said gear each being operatively interposed with respect to three of said power take-offs (15, 16, 17, 18).
**characterized in that** said first portion (8') comprises a first support shaft (25) and a first gear wheel (26) carried integrally by said first support shaft (25), said first gear wheel (26) meshing with a carrier (27), said carrier (27) being common to said differential mechanisms (28', 28") and being configured to house them inside.

2. System according to claim 1, wherein said second portion (8") comprises a pair of shafts (41, 44) each carrying a gear wheel (41', 41"), one of said shafts (41, 44) being integral with said second power take-off (16).

3. System according to claim 1, wherein the first differential mechanism (28') comprises a first and a second gear wheels (32', 33') meshing with satellites (29') carried by respective pins (31'), a first gear wheel (32') being operatively connected to one of said axles (2a, 2b, 2c, 2d), a second gear wheel (33') being operatively connected to said third power take-off (17).

4. System according to claim 1 or 3, wherein the second differential mechanism (28") comprises a first and a second gear wheels (32'', 33") meshing with satellites (29") carried by respective pins (31"), a first gear wheel (32") being operatively connected by means of a first support shaft (39) to said fourth power take-off (18), a second gear wheel (33") being operatively connected to said second portion (8") of said transmission (8).

5. System according to claim 4, wherein said second gear wheel (33") is connected to a second support shaft (41) coaxial to said first support shaft (39).

6. System according to claim 5, wherein said second support shaft (41) is externally coaxial to said first support shaft (39).

7. System according to claim 1, wherein the carriers (27', 27") of said first and second differential mechanism (28', 28") mesh with each other.

8. System according to claim 7, wherein the carrier (27') of said first differential mechanism (28') is rigidly connected to said first power take-off (15).

9. System according to claim 7 or 8, wherein the first differential mechanism (28') comprises a first and a second gear wheels (32', 33') meshing with satellites (29') carried by respective pins (31'), a first gear wheel (32') being connected to said second portion (8") of said transmission (8), a second gear wheel (33') being operatively connected to said second power take-off (16) by means of a first support shaft (59).

10. System according to claim 9, wherein said second gear wheel (33') is connected to a second support shaft (61) coaxial to said first support shaft (59).

11. System according to claim 10, wherein said second support shaft (61) is externally coaxial to said first support shaft (59).

12. System according to claim 10 or 11, wherein said second portion (8") comprises a pair of shafts (61, 66) each carrying a gear wheel (63', 63"), one of said shafts (61, 66) being integral with said fourth power take-off (16).

13. System according to one of claims 7 to 12, wherein the second differential mechanism (28") comprises a first and a second gear wheels (32", 33") meshing with satellites (29") carried by respective pins (31"), a first gear wheel (32'') being operatively connected to one of said axles (2a, 2b, 2c, 2d), a second gear wheel (33") being operatively connected to said third power take-off (17).

14. System according to one of claims 7 to 13, wherein said first and second differential mechanisms (28', 28") are vertically aligned with respect to each other.

15. System according to one of the preceding claims, wherein said casing comprises a septum portion (6') defining said portions (7', 7") of said space (7).

16. System according to one of the preceding claims, wherein the remaining power take-offs being isolated from the external environment by covers (21a, 21b, 21c, 21d) carried by said casing (6).

17. System according to one of the preceding claims, wherein said transmission (8) comprises locking means (50) to lock said differential mechanisms (28', 28").

18. Vehicle comprising a power source (1) capable of generating torque, a plurality of axles (2a, 2b, 2c, 2d) and a torque distributor (5) operatively interposed between said power source (1) and said axles (2a, 2b, 2c, 2d), said torque distributor (5) being made according to one of the preceding claims.

## Patentansprüche

1. Drehmomentverteilersystem (5) zum Verteilen des Drehmoments, das von einer Leistungsquelle (1) eines Fahrzeugs stammt, auf eine Vielzahl von Achsen (2a, 2b, 2c, 2d) des Fahrzeugs,
welches Verteilersystem (5) ein Gehäuse (6) umfasst, das angepasst ist, um einen Raum (7) zu begrenzen, der konfiguriert ist, um ein Getriebe (8) aufzunehmen, wobei das Gehäuse (6) eine Vielzahl von Öffnungen (9, 10, 11, 12) definiert, die konfiguriert sind, um jeweilige Nebenabtriebe (15, 16, 17, 18) aufzunehmen, die durch das Getriebe (8) miteinander verbunden sind, wobei ein erster Nebenabtrieb (15) der Nebenabtriebe (15, 16, 17, 18) mit der Leistungsquelle (1) verbindbar ist und mindestens ein zweiter (19) der Nebenabtriebe (15, 16, 17, 18) mit einer oder mehreren der Achsen (2a, 2b, 2c, 2d) verbindbar ist, wobei das Getriebe (8) einen ersten Abschnitt (8') und einen zweiten Abschnitt (8") umfasst, die operativ miteinander verbunden und in jeweiligen Abschnitten (7', 7") des Raums aufgenommen sind, wobei der erste Abschnitt (8') ein Paar von Differentialmechanismen (28', 28") und der zweite Abschnitt (8") ein Zahnrad (41) umfasst, wobei das Paar von Differentialmechanismen (28', 28") und das Zahnrad jeweils operativ in Bezug auf drei der Nebenabtriebe (15, 16, 17, 18) angeordnet sind,
**dadurch gekennzeichnet, dass** der erste Abschnitt (8') eine erste Lagerwelle (25) und ein erstes Zahnrad (26) umfasst, das integral von der ersten Lagerwelle (25) getragen wird, wobei das erste Zahnrad (26) mit einem Träger (27) kämmt, wobei der Träger (27) den Differentialmechanismen (28', 28") gemeinsam ist und konfiguriert ist, um sie im Inneren aufzunehmen.

2. System nach Anspruch 1, wobei der zweite Abschnitt (8") ein Paar von Wellen (41, 44) umfasst, die jeweils ein Zahnrad (41', 41") tragen, wobei eine der Wellen (41, 44) integral mit dem zweiten Nebenabtrieb (16) ist.

3. System nach Anspruch 1, wobei der erste Differentialmechanismus (28') ein erstes und ein zweites Zahnrad (32', 33') umfasst, die mit Satelliten (29') kämmen, die von jeweiligen Stiften (31') getragen werden, wobei ein erstes Zahnrad (32') operativ mit einer der Achsen (2a, 2b, 2c, 2d) verbunden ist und ein zweites Zahnrad (33') operativ mit dem dritten Nebenabtrieb (17) verbunden ist.

4. System nach Anspruch 1 oder 3, wobei der zweite Differentialmechanismus (28") ein erstes und ein zweites Zahnrad (32", 33") umfasst, die mit Satelliten (29") kämmen, die von jeweiligen Stiften (31") getragen werden, wobei ein erstes Zahnrad (32") mittels einer ersten Lagerwelle (39) operativ mit dem vierten Nebenabtrieb (18) verbunden ist und ein zweites Zahnrad (33") operativ mit dem zweiten Abschnitt (8") des Getriebes (8) verbunden ist.

5. System nach Anspruch 4, wobei das zweite Zahnrad (33") mit einer zweiten Lagerwelle (41) koaxial zu der ersten Lagerwelle (39) verbunden ist.

6. System nach Anspruch 5, wobei die zweite Lagerwelle (41) extern koaxial zu der ersten Lagerwelle (39) ist.

7. System nach Anspruch 1, wobei die Träger (27', 27") des ersten und des zweiten Differentialmechanismus (28', 28") einander kämmen.

8. System nach Anspruch 7, wobei der Träger (27') des ersten Differentialmechanismus (28') starr mit dem ersten Nebenabtrieb (15) verbunden ist.

9. System nach Anspruch 7 oder 8, wobei der erste Differentialmechanismus (28') ein erstes und ein zweites Zahnrad (32', 33') umfasst, die mit Satelliten (29') kämmen, die von jeweiligen Stiften (31') getragen werden, wobei ein erstes Zahnrad (32') mit dem zweiten Abschnitt (8") des Getriebes (8) verbunden ist und ein zweites Zahnrad (33') operativ mit dem zweiten Nebenabtrieb (16) mittels einer ersten Lagerwelle (59) verbunden ist.

10. System nach Anspruch 9, wobei das zweite Zahnrad (33') mit einer zweiten Lagerwelle (61) koaxial zu der ersten Lagerwelle (59) verbunden ist.

11. System nach Anspruch 10, wobei die zweite Lagerwelle (61) extern koaxial zu der ersten Lagerwelle (59) ist.

12. System nach Anspruch 10 oder 11, wobei der zweite Abschnitt (8") ein Paar von Wellen (61, 66) umfasst, die jeweils ein Zahnrad (63', 63") tragen, wobei eine der Wellen (61, 66) integral mit dem vierten Nebenabtrieb (16) ist.

13. System nach einem der Ansprüche 7 bis 12, wobei der zweite Differentialmechanismus (28") ein erstes und ein zweites Zahnrad (32", 33") umfasst, die mit Satelliten (29") kämmen, die von jeweiligen Stiften (31") getragen werden, wobei ein erstes Zahnrad (32") operativ mit einer der Achsen (2a, 2b, 2c, 2d) verbunden ist und ein zweites Zahnrad (33") operativ mit dem dritten Nebenabtrieb (17) verbunden ist.

14. System nach einem der Ansprüche 7 bis 13, wobei der erste und der zweite Differentialmechanismus (28', 28") vertikal aufeinander ausgerichtet sind.

15. System nach einem der vorhergehenden Ansprüche, wobei das Gehäuse einen Trennwandabschnitt (6') umfasst, der die Abschnitte (7', 7") des Raums (7) begrenzt.

16. System nach einem der vorhergehenden Ansprüche, wobei die übrigen Nebenabtriebe von der äußeren Umgebung durch Abdeckungen (21a, 21b, 21c, 21d) isoliert sind, die von dem Gehäuse (6) getragen werden.

17. System nach einem der vorhergehenden Ansprüche, wobei das Getriebe (8) Verriegelungsmittel (50) zum Blockieren der Differentialmechanismen (28', 28") umfasst.

18. Fahrzeug, umfassend eine Leistungsquelle (1), die in der Lage ist, Drehmoment zu erzeugen, eine Vielzahl von Achsen (2a, 2b, 2c, 2d) und einen Drehmomentverteiler (5), der operativ zwischen der Leistungsquelle (1) und den Achsen (2a, 2b, 2c, 2d) angeordnet ist, wobei der Drehmomentverteiler (5) gemäß einem der vorhergehenden Ansprüche ausgestaltet ist.

## Revendications

1. Système de répartiteur de couple (5) pour la répartition du couple provenant d'une source de puissance (1) d'un véhicule à une pluralité d'essieux (2a, 2b, 2c, 2d) dudit véhicule,
ledit système de répartiteur (5) comprenant un carter (6) adapté pour définir un espace (7) configuré pour loger une transmission (8), ledit carter (6) définissant une pluralité d'ouvertures (9, 10, 11, 12) configurées pour loger des prises de force (15, 16, 17, 18) respectives reliées entre elles par ladite transmission (8), une première prise de force (15) parmi lesdites prises de force (15, 16, 17, 18) étant raccordable à ladite source de puissance (1) et au moins une deuxième (19) desdites prises de force (15, 16, 17, 18) étant raccordable à un ou plusieurs desdits axes (2a, 2b, 2c, 2d), ladite transmission (8) comprenant une première portion (8') et une deuxième portion (8") raccordées de manière opérationnelle l'une à l'autre et logées dans des portions (7', 7'') respectives dudit espace, la première portion (8') comprenant
une paire de mécanismes différentiels (28', 28") et ladite deuxième portion (8") comprenant un engrenage (41), ladite paire de mécanismes différentiels (28', 28") et ledit engrenage étant chacun interposés de manière opérationnelle par rapport à trois prises de force parmi lesdites prises de force (15, 16, 17, 18).
**caractérisé en ce que** ladite première portion (8') comprend un premier arbre de support (25) et une première roue dentée (26) portée de manière solidaire par ledit premier arbre de support (25), ladite première roue dentée (26) s'engrenant avec un support (27), ledit support (27) étant commun auxdits mécanismes différentiels (28', 28") et étant configuré pour les loger à l'intérieur.

2. Système selon la revendication 1, dans lequel ladite deuxième portion (8") comprend une paire d'arbres (41, 44) portant chacun une roue dentée (41', 41"), l'un desdits arbres (41, 44) étant solidaire de ladite deuxième prise de force (16).

3. Système selon la revendication 1, dans lequel le premier mécanisme différentiel (28') comprend une première et une deuxième roues dentées (32', 33') s'engrenant avec des satellites (29') portés par des axes (31') respectifs, une première roue dentée (32') étant raccordée de manière opérationnelle à l'un desdits essieux (2a, 2b, 2c, 2d), une deuxième roue dentée (33') étant raccordée de manière opérationnelle à ladite troisième prise de force (17).

4. Système selon la revendication 1 ou 3, dans lequel le deuxième mécanisme différentiel (28") comprend une première et une deuxième roues dentées (32", 33") s'engrenant avec des satellites (29") portés par des axes (31") respectifs, une première roue dentée (32") étant raccordée de manière opérationnelle au moyen d'un premier arbre de support (39) à ladite quatrième prise de force (18), une deuxième roue dentée (33") étant raccordée de manière opérationnelle à ladite deuxième portion (8") de ladite transmission (8).

5. Système selon la revendication 4, dans lequel ladite deuxième roue dentée (33") est reliée à un deuxième arbre de support (41) coaxial audit premier arbre de support (39).

6. Système selon la revendication 5, dans lequel ledit deuxième arbre de support (41) est coaxial de manière externe audit premier arbre de support (39).

7. Système selon la revendication 1, dans lequel les supports (27', 27") dudit premier et deuxième mécanisme différentiel (28', 28") s'engrènent l'un avec l'autre.

8. Système selon la revendication 7, dans lequel le support (27') dudit premier mécanisme différentiel (28') est raccordé de manière rigide à ladite première prise de force (15).

9. Système selon la revendication 7 ou 8, dans lequel le premier mécanisme différentiel (28') comprend une première et une deuxième roues dentées (32', 33') s'engrenant avec des satellites (29') portés par des axes (31') respectifs, une première roue dentée (32') étant raccordée à ladite deuxième portion (8") de ladite transmission (8), une deuxième roue dentée (33') étant raccordée de manière opérationnelle à ladite deuxième prise de force (16) au moyen d'un premier arbre de support (59).

10. Système selon la revendication 9, dans lequel ladite deuxième roue dentée (33') est reliée à un deuxième arbre de support (61) coaxial audit premier arbre de support (59).

11. Système selon la revendication 10, dans lequel ledit deuxième arbre de support (61) est coaxial de manière externe audit premier arbre de support (59).

12. Système selon la revendication 10 ou 11, dans lequel ladite deuxième portion (8") comprend une paire d'arbres (61, 66) portant chacun une roue dentée (63', 63"), l'un desdits arbres (61, 66) étant solidaire de ladite quatrième prise de force (16).

13. Système selon l'une quelconque des revendications 7 à 12, dans lequel le deuxième mécanisme différentiel (28") comprend une première et une deuxième roues dentées (32", 33") s'engrenant avec des satellites (29") portés par des axes (31") respectifs, une première roue dentée (32") étant raccordée de manière opérationnelle à l'un desdits essieux (2a, 2b, 2c, 2d), une deuxième roue dentée (33") étant raccordée de manière opérationnelle à ladite troisième prise de force (17).

14. Système selon l'une des revendications 7 à 13, dans lequel lesdits premier et deuxième mécanismes différentiels (28', 28") sont verticalement alignés l'un par rapport à l'autre.

15. Système selon l'une des revendications précédentes, dans lequel ledit carter comprend une portion de septum (6') définissant lesdites portions (7', 7") dudit espace (7).

16. Système selon l'une des revendications précédentes, dans lequel les prises de force restantes sont isolées de l'environnement externe par des caches (21a, 21b, 21c, 21d) portés par ledit carter (6).

17. Système selon l'une des revendications précédentes, dans lequel ladite transmission (8) comprend des moyens de verrouillage (50) pour verrouiller lesdits mécanismes différentiels (28', 28").

18. Véhicule comprenant une source de puissance (1) capable de générer un couple, une pluralité d'essieux (2a, 2b, 2c, 2d) et un répartiteur de couple (5) interposé de manière opérationnelle entre ladite source d'alimentation (1) et lesdits essieux (2a, 2b, 2c, 2d), ledit répartiteur de couple (5) étant réalisé selon l'une des revendications précédentes.
